# EUROPÄISCHE PATENTSCHRIFT

(11) **EP 3 772 890 B1**
(45) Veröffentlichungstag und Bekanntmachung des Hinweises auf die Patenterteilung: **13.10.2021**
(21) Anmeldenummer: 20709512.6
(22) Anmeldetag: 25.02.2020
(51) Int. Cl.: A01D 34/17

(54) **OBERMESSERSCHWINGHEBELFÜHRUNG FÜR OSZILLIERENDE DOPPELMESSERSCHNEIDSYSTEME**
UPPER-BLADE ROCKING LEVER GUIDE FOR OSCILLATING DOUBLE-BLADE CUTTING SYSTEMS
GUIDE DU LEVIER OSCILLANT DE LA LAME SUPÉRIEURE POUR SYSTÈMES DE COUPE OSCILLANTS À DEUX LAMES

(30) Priorität: 21.03.2019 DE 202019101622 U
(43) Veröffentlichungstag der Anmeldung: 17.02.2021
(73) Patentinhaber: ESM Ennepetaler Schneid- und Mähtechnik Gmbh & Co. KG, 58256 Ennepetal (DE)
(72) Erfinder: NÜRNBERG, Alexander, 58313 Herdecke (DE); OEHLER, Wolfgang, 51688 Wipperfürth (DE); WESTERMEIER, Dirk, 58256 Ennepetal (DE)
(74) Vertreter: Patentanwälte Dörner & Kötter PartG mbB
(86) Internationale Anmeldenummer: PCT/EP2020/054883
(87) Internationale Veröffentlichungsnummer: WO 2020/187532

(56) Entgegenhaltungen:
- CH-A5- 653 211
- DE-C- 498 314
- DE-C- 526 577
- DE-C1- 3 313 132
- DE-U1- 29 504 346

## Beschreibung

Obermesserschwinghebelführung für oszillierende Doppelmesser-Schneidsysteme umfassend einen Führungsarm der in einer Führungsbaugruppe befestigt ist, die mindestens bereichsweise von einem Gehäuse umgeben ist. Doppelmesser-Schneidsysteme der hier betrachteten Art finden Anwendung, um Halmgüter aller Art wie Grünfutter, Sonderkulturen, Getreide, Gemüse oder dergleichen zu schneiden. Sie finden darüber hinaus Anwendung beim Schnitt von Hecken, Straßenbegleitgrün oder in der Gewässerpflege (an Gewässerrändern ebenso wie unter Wasser).

Ein Doppelmesser-Schneidsystem dieser Art ist beispielsweise aus der DE 31 02 861 A1 oder aus der DE 33 13 132 C1 bekannt, bei dem Ober- und Untermesser gegenläufig hin-und herbewegt werden. Mittels Doppelmesser-Schneidsystem ist besonders bei nur geringer Antriebsleistung ein gutes Mähergebnis bei gleichzeitig großen Arbeitsbreiten erzielbar. Insbesondere ein sauberer, glatter, erschütterungsarmer Schnitt des Mähguts zeichnet Doppelmesser-Schneidsysteme aus. Dies ist beispielsweise bei der Gewinnung von sauberem Futter sehr gewünscht und garantiert außerdem nachweislich einen optimalen Wiederaufwuchs des Ernteguts.

Die bekannten Doppelmesser-Schneidsysteme weisen Schwinghebelführungen auf. Diese Schwinghebelführungen oszillierender Schneidsysteme führen die Mähmesser im Schneidwerk. Die bei oszillierenden Schneidsystemen verbauten Untermesserschwinghebelführungen bestimmen die Lage der Messer im Schneidwerk, während die Obermesserschwinghebelführung den benötigten Messerandruck für den Schnitt mittels einer definierten Vorspannung gewährleistet. Ein Öffnen der Messerführung, beispielsweise zur Entnahme der Mähmesser, wird dabei üblicherweise durch das Aufstellen der Obermesserschwinghebel erreicht. Das Aufstellen ist dabei auf verschiedene Weise möglich.

So ist es beispielsweise bekannt, einen Aufstellbügel an der Obermesserschwinghebelführung vorzusehen. Zur Entnahme der Mähmesser wird der Aufstellbügel mithilfe von Werkzeug, bspw. eines Schraubendrehers, aufgestellt, um den Führungsarm bzw. den Führungszapfen für eine Entnahme des Obermessers freizustellen. Das System bleibt bei diesem Vorgang maximal belastet bzw. vorgespannt, bis der Aufstellbügel wieder in seine Ausgangsposition zurückgeklappt wird. Vorteilhaft bei dieser Lösung ist der konstruktiv einfache Aufbau. Zudem ist das System schmutzunempfindlich, weil keine Federkomponenten vorhanden sind, die durch Schmutzansammlung beeinflusst und dadurch bedingt zu einem Nachlassen des Messerandrucks führen könnten. Auch ist kein Spezialwerkzeug zum Aufstellen notwendig. Zudem hat auch ein Bodenkontakt keinen erhöhenden Einfluss auf den Messerandruck, welcher zur Überbelastung der der Führungsbaugruppe und zu höherem Messerverschleiß führen könnte. Allerdings weist diese Lösung auch Nachteile auf. So sind der Führungsarm sowie die Führungsbaugruppe und das darin üblicherweise enthaltene Gummielement beim Aufstellen außerordentlich hohen Belastungen ausgesetzt. Zwar können eine hohe Gummiqualität und feste Bauteilverbindungen im Führungsarm plastische Verformung reduzieren; solche Verformungen können jedoch niemals vollständig ausgeschlossen werden. Solche Verformungen sind insbesondere dann zu befürchten, wenn der Führungsarm längere Zeit in seiner aufgestellten Position verbleibt. Folglich sollten die Bearbeitungszeiten sehr kurz gehalten werden. Darüber hinaus besteht bei der Benutzung des Aufstellbügels auch ein nicht unerhebliches Sicherheitsrisiko. So kann es bspw. beim Aufstellen zu einem Umschlagen des Aufstellbügels kommen, wodurch aufgrund der hohen Vorspannungskräfte ein erhebliches Verletzungsrisiko vorliegt. Insbesondere kann es auch zu einem selbständigen Umklappen des Aufstellbügels kommen, was beispielsweise während der Messerentnahme bzw. des Anbaus des Messers für den jeweiligen Bediener ein hohes Verletzungsrisiko in sich birgt.

Eine alternative Lösung besteht darin, an der Obermesserschwinghebelführung eine Unterfederverriegelung vorzusehen. Bei diesem System wird der Führungsarm mittels Spezialwerkzeug aufgestellt, um den Führungszapfen zur Entnahme des Obermessers freizustellen. Der Führungsarm sowie die Führungsbaugruppe werden dabei nur so lange verdreht bzw. vorgespannt, bis die Unterfeder die Führungsbaugruppe freigibt. Das System aus Führungsbaugruppe und Arm bleibt im aufgestellten Zustand unbelastet und wird erst nach Rückführung in die Funktionsstellung wieder belastet. Auch bei einem längeren Verbleiben in aufgestelltem Zustand führt dies nicht zu einer Einbuße an Schnittqualität und Standzeit. Nachteilig an dieser Lösung ist jedoch, dass auch hier beim Aufstellen die Führungsbaugruppe mit dem darin enthaltenen Gummielement maximal und unbestimmt belastet wird. Zwar können auch bei dieser Lösung durch Auswahl einer hohen Gummiqualität sowie fester Bauteilverbindungen Schädigungen reduziert aber niemals vollständig ausgeschlossen werden. Zudem erfolgt das Lösen und Anziehen der Feder mittels einer Klemmschraube, was beim Wiederherstellen der Einsatzposition zu Einstellungsfehlern führen kann, bedingt durch den unmittelbaren Einfluss von Reibwerten, Toleranzen und dergleichen. Im Falle einer nicht ordnungsgemäßen Einstellung kann es dabei zu Fehlern kommen, die negativen Einfluss auf die Qualität und den Verschleiß haben. Darüber hinaus ist das bekannte System schmutzempfindlich, da die vorgesehenen Federkomponenten durch Schmutzansammlung beeinträchtigt werden können, was wiederum Einfluss auf den Messerandruck hat. Außerdem ist zur Betätigung der bekannten Lösung Spezialwerkzeug erforderlich. Auch ist der Aufbau dieses Systems relativ aufwändig, wodurch auch die Montage erschwert wird. Zudem weist das System eine Vielzahl toleranzabhängiger Bauteile auf, was ebenfalls aufwändig und damit kostenintensiv ist. Weiterhin ist das bekannte System für die Verwendung einer Laufkufe bzw. Gleitkufe, welche direkt mit Befestigungsschrauben der Führung verschraubt wird, nicht geeignet.

Vor diesem Hintergrund liegt der vorliegenden Erfindung die Aufgabe zu Grunde, eine Obermesserschwinghebelführung zu schaffen, bei der mit geringem Material- und Kostenaufwand ein Öffnen der Messerführung, beispielsweise zur Entnahme der Mähmesser, möglich ist, ohne das System aus Führungsbaugruppe und Führungsarm zu belasten und es gleichzeitig ohne Risiko für die Sicherheit des jeweiligen Benutzers bedienen zu können. Gemäß der Erfindung wird diese Aufgabe durch die Merkmale des Patentanspruchs 1 gelöst.

Mit der Erfindung ist eine Obermesserschwinghebelführung für oszillierende Doppelmesser-Schneidsysteme geschaffen, bei der ein Öffnen der Messerführung zur Entnahme der Mähmesser möglich ist, ohne den Führungsarm und die Führungsbaugruppe zu belasten. Insbesondere ist keine Veränderung der Position in einen vorgespannten Zustand erforderlich, so dass keine negativen Folgen auf das System auch bei häufigem Messerwechsel zu befürchten sind.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:

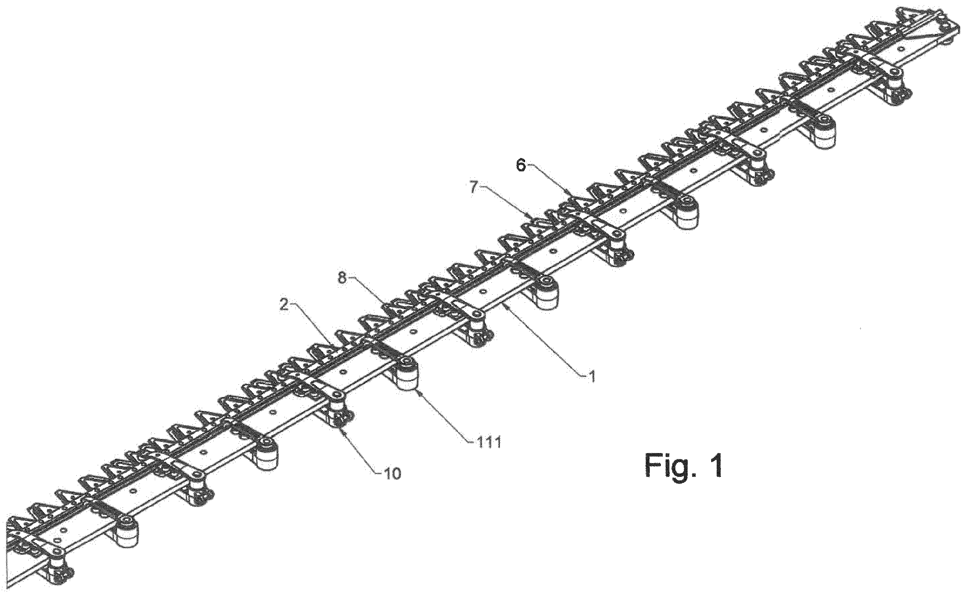

- Figur 1: die perspektivische, abschnittsweise Darstellung eines Doppelmesser-Schneidsystems;
- Figur 2: die Draufsicht auf eine Messerführung für das Obermesser in Betriebsposition;
- Figur 3: den Schnitt entlang der Linie A-A in Figur 2;
- Figur 4: die dreidimensionale Darstellung der in Figur 2 dargestellten Messerführung;
- Figur 5: die Draufsicht auf die in Figur 2 dargestellte Messerführung in aufgestellter Position;
- Figur 6: den Schnitt entlang der Linie A-A in Figur 5;
- Figur 7: die dreidimensionale Darstellung der in Figur 5 dargestellten Messerführung;
- Figur 8: die Draufsicht auf eine Messerführung für das Obermesser in Betriebsposition in anderer Ausbildung;
- Figur 9: den Schnitt entlang der Linie A-A in Figur 8;
- Figur 10: die dreidimensionale Darstellung der in Figur 8 dargestellten Messerführung;
- Figur 11: die Draufsicht auf die in Figur 8 dargestellte Messerführung in aufgestellter Position;
- Figur 12: den Schnitt entlang der Linie A-A in Figur 11;
- Figur 13: die dreidimensionale Darstellung der in Figur 11 dargestellten Messerführung;

Das im Ausführungsbeispiel dargestellte Doppelmesser-Schneidsystem besteht aus einem Balkenrücken 1 an dem ein Messerrücken 2 für ein Obermesser und ein Messerrücken 3 für ein Untermesser angeordnet sind. An dem Messerrücken 2 für das Obermesser ist eine Vielzahl von Doppelmesser-Schneidelementen 6 befestigt; an dem Messerrücken 3 für das Untermesser ist eine Vielzahl von Doppelmesser-Schneidelementen 7 angeordnet. Die Doppelmesser-Schneidelemente 6 und 7 sind mittels Befestigungsmitteln 8 an den Messerrücken 2, 3 befestigt.

An dem Balkenrücken 1 sind Messerführungen 10 für das Obermesser und Messerführungen 110 für das Untermesser befestigt. Die Messerführungen 10, 110 umfassen Führungsarme 11, 111. Die Führungsarme 11 weisen Federeigenschaften auf, wodurch das Obermesser mit seinen Schneidelementen 6 gegen das Untermesser mit seinen Schneidelementen 7 gedrückt wird.

An den freien Enden der Führungsarme 11, 111 sind jeweils Buchsen vorgesehen, von denen lediglich die die Buchsen 12 der Führungsarme 11 für das Obermesser in den Figuren dargestellt sind. Die Buchsen 12 weisen Aufnahmen 13 in Form von Hohlzapfen auf. Die Aufnahmen 13 wirken mit Führungszapfen 61 der Doppelmesser-Schneidelemente 6 zusammen. An den den Buchsen 12 abgewandten Enden sind die Führungsarme 11 in Führungsbaugruppen 15 befestigt. Jede Führungsbaugruppe 15 ist bereichsweise von einem Gehäuse 16 umgeben. An dem dem Boden zugewandten Ende ist an dem Gehäuse 16 ein Halter 17 ausgebildet. Die Halter 17 sind mit dem Balkenrücken 1 mit Hilfe von Schrauben 18 verschraubt.

Die Führungsbaugruppen 15 weisen auf ihren den Buchsen 12 der Führungsarme 11 abgewandten Seite jeweils eine vertikal ausgerichtete Fläche 151 auf. Sie sind in dem Gehäuse 16 um eine Achse 152 schwenkbar gelagert. Jede Führungsbaugruppe 15 steht unter dem Einfluss einer Feder 19, welche im Ausführungsbeispiel eine abgewinkelte Form hat. Dadurch sind ein horizontal ausgerichteter Schenkel 191 und ein dazu unter einem Winkel ausgerichteter Schenkel 192 ausgebildet. Der horizontal ausgerichtete Schenkel 191 ist zwischen dem Balkenrücken 1 und dem Halter 17 geklemmt gehalten. Der unter einem Winkel ausgerichtete Schenkel 192 liegt mit seinem freien Ende an der Führungsbaugruppe 15 an, wodurch die Führungsbaugruppe 15 vorgespannt ist.

Auf der dem Führungsarm 11 abgewandten Seite ist in dem Gehäuse 16 ein Exzenter 9 angeordnet. Der Exzenter 9 steht mit der Fläche 151 der Führungsbaugruppe 15 in Kontakt. Der Exzenter 9 ist mit einem Antriebsprofil 91 versehen, welches zum Ansetzen eines Werkzeugs, im Ausführungsbeispiel eines Maulschlüssels M, zur Betätigung des Exzenters 9 dient. Das Antriebsprofil 91 kann in Abwandlung des Ausführungsbeispiels andere Gestaltungen haben, bspw. eine Bohrung zum Einstecken eines Werkzeugs wie etwa eines Schraubendrehers

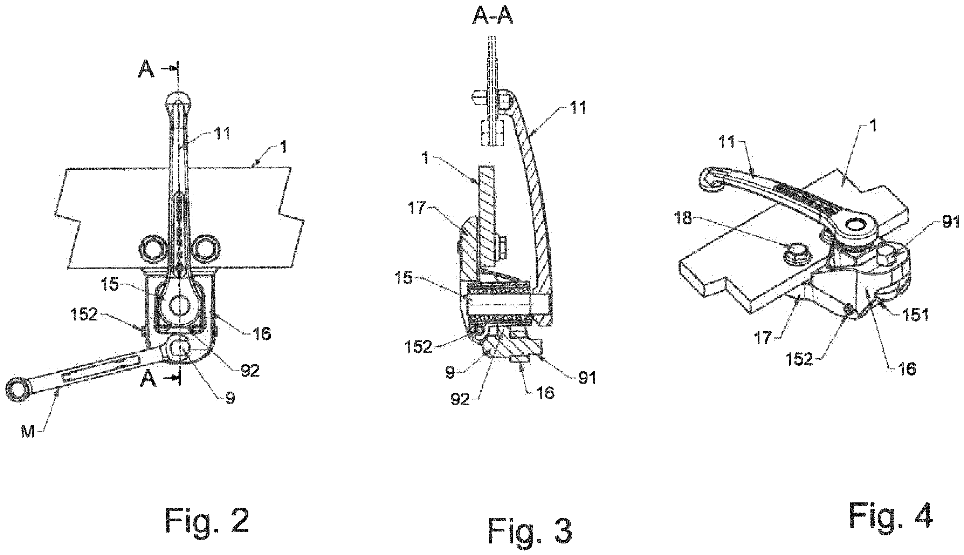

Im Ausführungsbeispiel nach den Figuren 2 bis 7 ist der Exzenter 9 vertikal ausgerichtet. Das bedeutet, dass der Exzenter mit Hilfe des Maulschlüssels M um eine im Wesentlichen senkrecht ausgerichtete Drehachse drehbar ist. Der Exzenter 9 weist einen Vorsprung 92 auf, der in der Betriebsposition der Messerführung, wie sie in den Figuren 2 bis 5 dargestellt ist, an der Fläche 151 der Führungsbaugruppe 15 anliegt.

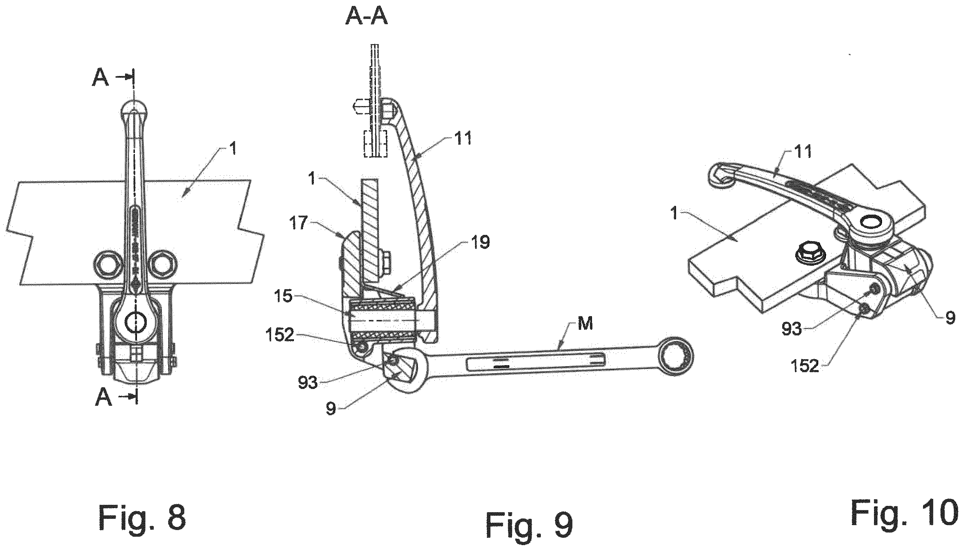

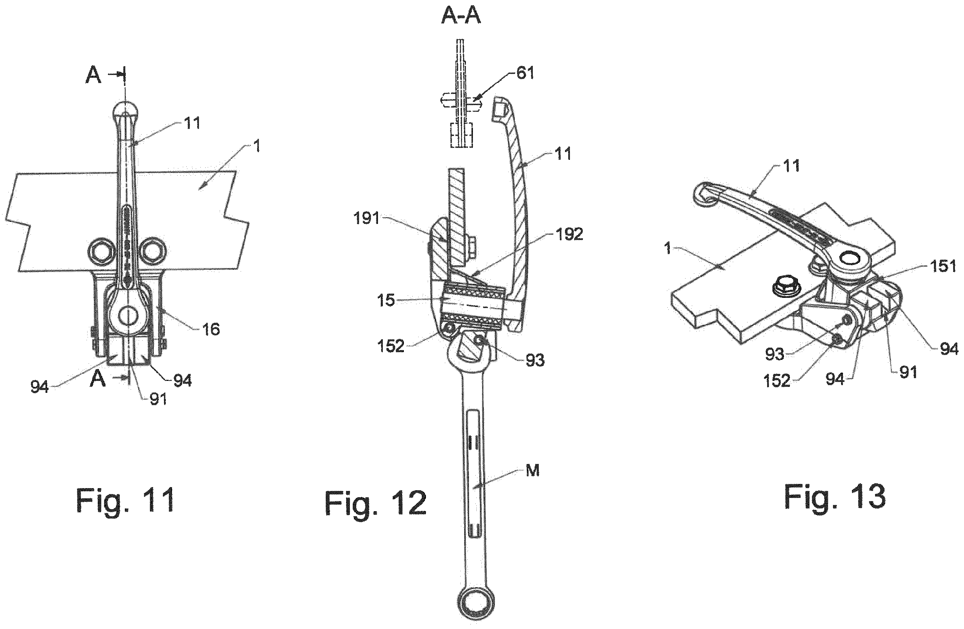

Im Ausführungsbeispiel nach den Figuren 8 bis 13 ist der Exzenter 9 horizontal ausgerichtet. Das bedeutet, dass der Exzenter mit Hilfe des Maulschlüssels M um eine im Wesentlichen horizontal ausgerichtete Drehachse 93 drehbar ist. Der Exzenter 9 weist bei dieser Ausführung zwei Vorsprünge 94 auf, die in der Betriebsposition der Messerführung, wie sie in den Figuren 8 bis 10 dargestellt ist, an der Fläche 151 der Führungsbaugruppe 15 anliegt.

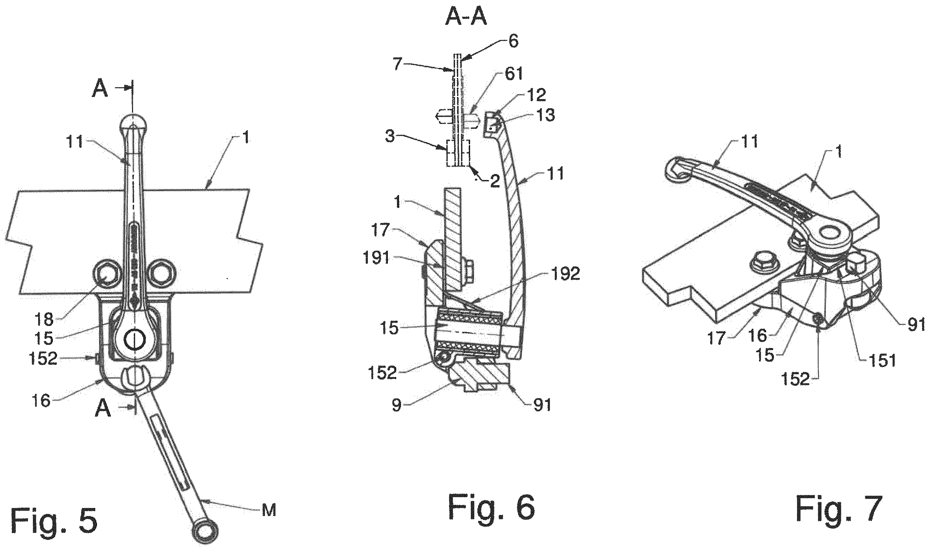

Zum öffnen der Obermesserschwinghebelführung, beispielsweise zur Entnahme der Mähmesser, wird der Exzenter 9 mittels eines Werkzeugs, in den Ausführungsbeispielen mittels eines Maulschlüssels M, um die jeweilige Achse um etwa 90° gedreht; im Ausführungsbeispiel nach den Figuren 2 bis 7 ist dies die vertikal Achse, im Ausführungsbeispiel nach den Figuren 8 bis 13 ist dies die horizontale Achse. Beim Drehen des Exzenters 9 werden die Vorsprünge 92, 94 aus ihrer in Kontakt mit der Fläche 151 befindlichen Position herausbewegt. Die auf die Führungsbaugruppe 15 ausgeübte Kraft der Feder 19 bewirkt gleichzeitig ein Schwenken der Führungsbaugruppe 15 und gleichzeitig ein Hochklappen des Führungsarms 11 aus der Betriebsposition in eine aufgestellte Position, wie sie in den Figuren 5 bis 7 und 11 bis 13 dargestellt ist. Dadurch wird der Führungszapfen 61 aus der Aufnahme 13 in der Buchse 12 freigegeben, so dass das Messer in einfacher Weise entnommen werden kann. Ebenso kann in dieser Position ein neues Messer montiert werden.

Mit der Erfindung ist eine Obermesserschwinghebelführung geschaffen, bei der ein Austausch der Messer einfacher, materialschonender und gefahrloser vorgenommen werden kann, als das beim Stand der Technik der Fall ist. So ist das Aufstellen der Schwinghebelführung aufgrund der guten Erreichbarkeit des Exzenters einfach möglich. Zudem ist kein Spezialwerkzeug erforderlich. Darüber hinaus ist sowohl der Führungsarm als auch die Führungsbaugruppe im aufgestellten Zustand unbelastet, so dass die aus dem Stand der Technik bekannten Schädigungen, bspw. durch plastische Verformungen, nicht auftreten können. Zudem ist ein Zurückschlagen des Führungsarms und der Führungsbaugruppe nicht zu befürchten, da das System in aufgestelltem Zustand nicht unter Spannung steht.

## Patentansprüche

1. Obermesserschwinghebelführung für oszillierende Doppelmesser-Schneidsysteme umfassend einen Führungsarm (11) der in einer Führungsbaugruppe (15) befestigt ist, die mindestens bereichsweise von einem Gehäuse (16) umgeben ist, **dadurch gekennzeichnet, dass** die Führungsbaugruppe (15) schwenkbar in dem Gehäuse (16) gelagert ist und in dem Gehäuse (16) ein Exzenter (9) angeordnet ist, der mit der Führungsbaugruppe (15) in Kontakt steht.

2. Obermesserschwinghebelführung nach Anspruch 1, **dadurch gekennzeichnet, dass** der Exzenter (9) mit einem Antriebsprofil (91) versehen ist.

3. Obermesserschwinghebelführung nach Anspruch 1 oder 2, **dadurch gekennzeichnet, dass** der Exzenter (9) vertikal ausgerichtet ist.

4. Obermesserschwinghebelführung nach Anspruch 1 oder 2, **dadurch gekennzeichnet, dass** der Exzenter (9) horizontal ausgerichtet ist.

5. Obermesserschwinghebelführung nach einem der vorgenannten Ansprüche, **dadurch gekennzeichnet, dass** der Exzenter (9) mindestens einen Vorsprung (91, 93) aufweist, der mit einer Fläche (151) der Führungsbaugruppe (15) in Kontakt steht.

6. Obermesserschwinghebelführung nach einem der vorgenannten Ansprüche, **dadurch gekennzeichnet, dass** die Führungsbaugruppe (15) unter dem Einfluss einer Feder (19) steht.

## Claims

1. Upper blade rocking lever guide for oscillating double blade cutting systems comprising a guide arm (11), which is mounted in a guide assembly (15), which is at least partially surrounded by a housing (16), **characterised in that** the guide assembly (15) is pivotably mounted in the housing (16) and an eccentric (9) is arranged in the housing (16), which eccentric is in contact with the guide assembly (15).

2. Upper blade rocking lever guide according to claim 1, **characterised in that** the eccentric (9) is provided with a drive profile (91).

3. Upper blade rocking lever guide according to claim 1 or 2, **characterised in that** the eccentric (9) is vertically aligned.

4. Upper blade rocking lever guide according to claim 1 or 2, **characterised in that** the eccentric (9) is horizontally aligned.

5. Upper blade rocking lever guide according to one of the previous claims, **characterised in that** the eccentric (9) has at least one projection (91, 93), which is in contact with a surface (151) of the guide assembly (15).

6. Upper blade rocking lever guide according to one of the previous claims, **characterised in that** the guide assembly (15) is under the influence of a spring (19).

## Revendications

1. Guide du levier oscillant de la lame supérieure pour systèmes de coupe oscillants à deux lame comprenant un bras de guidage (11) monté dans un ensemble de guidage (15) entouré au moins en partie par un boîtier (16), **caractérisé en ce que** l'ensemble de guidage (15) est monté de manière pivotante dans le boîtier (16) et **en ce qu'**un excentrique (9) est disposé dans le boîtier (16) et est en contact avec l'ensemble de guidage (15).

2. Guide du levier oscillant de la lame supérieure selon la revendication 1, **caractérisé en ce que** l'excentrique (9) est muni d'un profil d'entraînement (91).

3. Guide du levier oscillant de la lame supérieure selon la revendication 1 ou 2, **caractérisé en ce que** l'excentrique (9) est aligné verticalement.

4. Guide du levier oscillant de la lame supérieure selon la revendication 1 ou 2, **caractérisé en ce que** l'excentrique (9) est aligné horizontalement.

5. Guide du levier oscillant de la lame supérieure selon l'une des revendications précédentes, **caractérisé en ce que** l'excentrique (9) comporte au moins une saillie (91 , 93) qui est en contact avec une surface (151) de l'ensemble de guidage (15).

6. Guide du levier oscillant de la lame supérieure selon l'une des revendications précédentes, **caractérisé en ce que** l'ensemble de guidage (15) est sous l'influence d'un ressort (19).
